# EUROPÄISCHE PATENTSCHRIFT

(11) **EP 4 343 174 B1**
(45) Veröffentlichungstag und Bekanntmachung des Hinweises auf die Patenterteilung: **29.10.2025**
(21) Anmeldenummer: 22197286.2
(22) Anmeldetag: 23.09.2022
(51) Int. Cl.: F16H 37/04, F16H 1/22, F16D 1/04, F16C 23/00, F16C 23/08, F16C 35/067, F16H 57/02

(54) **LEISTUNGSVERZWEIGTES SCHNECKENRADGETRIEBE SOWIE DAMIT VERSEHENER GETRIEBEMOTOR**
POWER-SPLIT WORM-WHEEL TRANSMISSION AND GEARED MOTOR EQUIPPED THEREWITH
ENGRENAGE À VIS SANS FIN À RÉPARTITION DE PUISSANCE ET MOTEUR À ENGRENAGES ÉQUIPÉ DE CELUI-CI

(43) Veröffentlichungstag der Anmeldung: 27.03.2024
(73) Patentinhaber: Getriebebau NORD GmbH & Co. KG, 22941 Bargteheide (DE)
(72) Erfinder: Bouché, Bernhard, 22941 Bargteheide (DE); Gompers, Sven, 22929 Schönberg (DE)
(74) Vertreter: Glawe, Delfs, Moll

(56) Entgegenhaltungen:
- EP-B1- 0 792 779
- WO-A1-2019/016769
- CN-A- 111 188 875
- CN-A- 111 395 225
- DE-A1- 102007 054 180
- DE-A1- 102017 220 917
- DE-A1- 102020 214 844
- JP-A- 2010 169 150

## Beschreibung

Die Erfindung betrifft ein Schneckengetriebe, insbesondere als Winkelgetriebe, umfassend eine Schneckenstufe und eine Stirnradstufe in einem Getriebegehäuse, sowie einen damit versehenen Getriebemotor. Die Schneckenstufe weist eine Schneckenwelle mit zwei Schneckenverzahnungen, die gegensinnig auf der Schneckenwelle angeordnet sind, und mindestens zwei quer zur Schneckenwelle angeordnete Zwischenwellen mit jeweils einem Schneckenrad auf, die jeweils in eine der Schneckenverzahnungen eingreifen, wobei die Schneckenräder an gegenüberliegenden Seiten der Schneckenwelle angeordnet sind. Die Stirnradstufe umfasst jeweils ein Ritzel auf den Zwischenwellen und ein Abtriebszahnrad auf einer Abtriebswelle, wobei das Abtriebszahnrad ein gemeinsames Abtriebszahnrad ist, mit dem die Ritzel kämmen. Die Schneckenwelle weist an ihrem antriebsnahen Ende eine Ankopplung für eine Treibwelle eines Antriebsmotors auf.

Schneckenradgetriebe der eingangs genannten Art werden industriell in Serie hergestellt. Sie sind in vielen Anwendungen eingesetzt, wo es durch erhebliche Übersetzung darum geht große Drehmomente aufzubringen, wie bspw. zum Antreiben von Walzen bei Fördermaschinen. Insbesondere bei starker Übersetzung sind die Zahnflanken der Schneckenverzahnungen hohen Belastungen ausgesetzt, wie auch das Abtriebszahnrad sehr großer Belastung insbesondere durch das hohe Drehmoment am Abtrieb ausgesetzt ist. Diese Komponenten und ihre Belastung bestimmen maßgeblich die Dimensionierung des Schneckengetriebes. Deren Abmessungen sind ein Hindernis auf dem Weg zu verbesserten, kompakten Getrieben.

Ein Weg zu verbesserter Kompaktheit führt über eine höhere Materialausnutzung, indem die Schneckenwelle nicht nur ein, sondern zwei Schneckenräder treibt. Eine derartige Ausgestaltung eines Schneckengetriebes ist bekannt für einen kleinen Leistungsbereich, nämlich zum Antrieb für Scheibenwischer von Fahrzeugen (EP 0 792 779 B1). Die Schneckenwelle ist hierbei zugleich die Antriebswelle des Motors und weist an ihrem freien Ende zwei Schneckenverzahnungen mit gegensinniger Steigung auf, in die zwei gegenüberliegend an der Schneckenwelle angeordnete Schneckenräder eingreifen. Es ergibt sich so eine Leistungsverzweigung, welche in dem Abtriebszahnrad wieder zusammengeführt wird. Hierbei wirken auf das Abtriebszahnrad zwei kämmende Ritzel ein, wodurch sich das übertragbare Drehmoment des Abtriebszahnrads bei gleicher Größe nahezu verdoppelt. Es ergibt sich so eine erheblich bessere Ausnutzung. P Ein weiteres Beispiel eines Schneckengetriebes ist in CN111395225A offenbart.

Für kleinere Leistung, wie das genannte Anwendungsbeispiel als Scheibenwischerantrieb, hat sich dieses Konzept bewährt. Allerdings ist es weniger geeignet zur Übertragung von höheren Leistungen.

Der Erfindung liegt daher die Aufgabe zugrunde, Schneckengetriebe auf wenig aufwendige und daher kostengünstige Weise für höhere Leistung bzw. Abtriebsdrehmoment auszubilden.

Die erfinderische Lösung liegt in einem Schneckengetriebe gemäß dem Hauptanspruch sowie in einer Getriebe/Motor-Anordnung gemäß dem nebengeordneten Anspruch. Vorteilhafte Weiterbildungen sind Gegenstand der abhängigen Ansprüche.

Bei einem Schneckengetriebe umfassend eine Schneckenstufe und eine Stirnradstufe in einem Getriebegehäuse, wobei die Schneckenstufe eine Schneckenwelle mit zwei gegensinnigen Schneckenverzahnungen und mindestens zwei quer zur Schneckenwelle angeordnete Zwischenwellen mit jeweils einem Schneckenrad umfasst, wobei die Schneckenräder an gegenüberliegenden Seiten der Schneckenwelle angeordnet sind sowie eines der Schneckenräder in eine der Schneckenverzahnungen und das andere in die andere der Schneckenverzahnungen eingreift, und die Stirnradstufe umfasst jeweils ein Ritzel auf den Zwischenwellen und ein Abtriebszahnrad auf einer Abtriebswelle, wobei das Abtriebszahnrad ein gemeinsames Abtriebszahnrad ist, mit dem die Ritzel kämmen, und die Schneckenwelle an ihrem einen, antriebsnahen Ende eine Ankopplung für eine Treibwelle aufweist, ist erfindungsgemäß vorgesehen, dass die Ankopplung als eine Schiebekupplung ausgeführt ist, die dazu ausgebildet ist, die Treibwelle drehfest aber axial verschieblich aufzunehmen zur Übertragung eines von einem Antriebsmotor auf die Treibwelle aufgebrachten Drehmoments zum Antrieb der Schneckenwelle, wobei die Schneckenwelle lediglich einseitig im Getriebegehäuse gelagert ist, und zwar mittels eines Lagers an ihrem antriebsfernen Ende.

Zuerst seien einige verwendete Begriffe erläutert:
Unter einer "Schiebekupplung" wird eine drehmomentübertragende Kopplung zwischen zwei Wellen verstanden, die im gekoppelten Zustand einen Freiheitsgrad in Bezug auf eine axiale Relativbewegung (Längsverschiebung) zwischen den Wellen aufweist.

Unter der "Treibwelle" wird diejenige Welle verstanden, die als Antrieb für das erfindungsgemäße Schneckengetriebe fungiert. Typischerweise ist das die Motorwelle eines Antriebsmotors, es kann sich aber auch um eine andere antreibende Welle handeln, beispielsweise bei einem mittels Adapterstück angeschlossenen Antriebsmotor ist dann die aus dem Adapterstück führende, vom Antriebsmotor angetriebene Adapterwelle die Treibwelle. Die Treibwelle leitet so das Drehmoment des Antriebsmotors in das Schneckengetriebe ein.

Die Erfindung hat erkannt, dass unter Bewahrung der Kompaktheit des Getriebes die übertragbare Leistung und Drehmoment beträchtlich erhöht werden kann, indem drei miteinander zusammenwirkende Maßnahmen kombiniert werden. Die erste besteht darin, dass eine Lagerung für die Schneckenwelle am Getriebegehäuse nur am antriebsfernen Ende der Schneckenwelle vorgesehen ist, wohingegen antriebsseitig am Getriebegehäuse kein Lager für die Schneckenwelle vorgesehen ist. Insoweit ist das antriebsseitige Ende der Schneckenwelle "frei" im Getriebegehäuse angeordnet. Weiterhin ist, wie die Erfindung weiter erkannt hat, diese Lagerung am Getriebegehäuse so auszuführen, dass sie zwar das ferne Ende der Schneckenwelle radial festlegt, aber die Schneckenwelle in einer Grundkonfiguration des Lagers möglichst axial verschieblich ist. Auf diese Weise kann eine selbsteinstellende Zentrierung der Schneckenwelle in axialer Richtung erfolgen. Um dies zu ermöglichen, sieht die Erfindung als dritte Maßnahme vor, dass die Ankopplung an die Treibwelle nicht starr ist, sondern über eine Schiebekupplung ausgeführt ist, um so eine axiale Beweglichkeit der Schneckenwelle relativ zu der antreibenden Treibwelle bzw. zu dem Antriebsmotor zu ermöglichen. Dies ist bei einer starren Ankopplung nicht möglich, und schon gar nicht bei einer einteiligen Ausführung, wie sie bei Anwendungen für kleine Leistung, beispielsweise im Stand der Technik für Scheibenwischergetriebemotoren, üblich ist.

Durch das Zusammenwirken dieser drei Maßnahmen kann erfindungsgemäß zusätzlich zu einer Leistungsverzweigung auf kompakte Weise eine Steigerung der übertragbaren Leistung und Drehmomente erreicht werden. Weiter macht sich die Erfindung die Erkenntnis zunutze, dass sich die durch die gegenüberliegende Anordnung der Schneckenräder die auf die Schneckenwelle wirkenden Momente dank der radialfesten Lagerung der Schneckenwelle weitgehend kompensieren, sodass mit der erfindungsgemäßen Ankopplung mittels einer Schiebekupplung eine ausreichende Lagerung der Welle auf der Antriebsseite erreicht werden kann. Insbesondere kann so für die Schneckenwelle auf der Antriebsseite ein zweites und schweres Lager am Getriebegehäuse eingespart werden. Zum einen stellt dies eine Vereinfachung und Gewichtsersparnis dar. Außerdem verringert sich so die Lagerreibung und damit Reibungsverluste. Zum anderen sorgt dies zusammen mit der Verschieblichkeit in Längsrichtung dafür, dass auch bei hohen Antriebsleistungen einschließlich dabei auftretender Erwärmung der Komponenten - insbesondere auch thermischer Längung der Schneckenwelle und/oder der Treibwelle - eine stabile und zuverlässige Aufteilung der Drehmomente auf die beiden Schneckenräder erreicht bzw. dauerhaft beibehalten werden kann, wobei gleichzeitig das Getriebe kompakt und wirkungsgradgünstig gehalten werden kann. Letzteres kommt insbesondere dann zur vollen Wirkung, wenn das Lager der Schneckenwelle am Gehäuse als Loslager ausgeführt ist. Unter einem "Loslager" wird ein Radiallager verstanden, das eine Welle radial (bis auf technisch erforderliches Lagerspiel) fixiert, aber eine axiale Verschieblichkeit zulässt. Dies umfasst eine unbeschränkte axiale Verschieblichkeit sowie den Aspekt, dass der Umfang der axialen Verschieblichkeit einstellbar bzw. beschränkt sein kann.

Bei einer bevorzugten Ausführungsform ist optional am Lager eine Spielfixiereinrichtung vorgesehen, mit der in einem ersten Zustand ein Axialspiel das Lagers auf Null reduziert ist. Vorzugsweise erfolgt dies, indem das Schneckenlager axial in Richtung zum Antriebsmotor hin mit einer definierten Kraft vorgespannt wird (Vorspannung). Hierdurch wird nicht nur das Axialspiel der Schneckenwelle eliminiert, sondern in der Folge werden auch die übrigen Zahnräder in die gegenseitige Anlage gedrückt, so dass die Zahnspiele in allen Getriebestufen durch diese Vorspannung unwirksam werden. Die beiden Zwischenwellen sind dann bezüglich ihrer Lage miteinander verzwängt, wodurch erreicht wird, dass das Schneckengetriebe insgesamt spielfrei ist. Durch diese Ausführungsform mit der Spielfixiereinrichtung, die ggf. leicht nachrüstbar ist, kann ein Getriebe ohne Verdrehspiel realisiert werden, und zwar ohne dass aufwendige besondere Zahnräder mit eingeengtem Zahnspiel erforderlich wären. Somit kann auf einfache Weise durch eine simple Modifikation ein spielfreies Schneckengetriebe bereitgestellt sein, welches sich insbesondere für Anwendungen im Bereich von Präzisionssteuerungen eignet.

Zweckmäßigerweise ist die Spielfixiereinrichtung zwischen dem ersten Zustand und einem zweiten Zustand umschaltbar, wobei die Fixiereinrichtung in dem zweiten Zustand deaktiviert ist und das Axialspiel freigeben ist. Damit kann das Getriebe wahlweise als spielfreies Getriebe (im ersten Zustand) oder als leistungsverzweigendes Getriebe (dank des Axialspiels im zweiten Zustand) betrieben werden. Vorzugsweise ist die Spielfixiereinrichtung im eingebauten Zustand von außen zwischen den Zuständen umschaltbar.

Unter "von außen" wird verstanden, dass ein Zugriff direkt oder nahezu direkt ermöglicht ist, ggf. unter Demontage von Abdeckungen, Verschlüssen und/oder Verschlusskappen, jedenfalls aber ohne Zerlegen des Schneckengetriebes.

Vorzugsweise ist vorgesehen, dass die Spielfixiereinrichtung einen Aufnahmeraum für ein Sperrelement aufweist, welches dazu ausgebildet ist axiale Beweglichkeit zu blockieren. Somit kann durch Einsetzen oder Entfernen des Sperrelements in den bzw. aus dem Aufnahmeraum auf besonders einfache und auch nachträglich sowie im Feld leicht durchführbare Weise zwischen dem ersten spielfreien Zustand und dem zweiten Zustand mit Axialspiel (und leistungsverzweigend) umgeschaltet werden. Das Getriebe ist dadurch umschaltbar zwischen der spielfreien und der spielbehafteten Version.

Mit Vorteil umfasst die Spielfixiereinrichtung eine Mehrzahl von auswechselbaren Passscheiben unterschiedlicher Dicke sowie vorzugsweise einen Sicherungsring für die Passscheiben. Hiermit kann auf einfache, zuverlässige Weise eine präzise Einstellung des Spiels erreicht sein. Auf diese Weise kann das Schneckenlager axial in Richtung zum Antriebsmotor hin mit einer definierten Kraft vorgespannt werden.

Zweckmäßigerweise ist vorgesehen, dass die Schiebekupplung zur Übertragung von Radialkräften ausgebildet ist. Damit kann eine zusätzliche Stabilisierung der Schneckenwelle erreicht werden. Spielfreiheit in radialer Richtung ist dazu nicht erforderlich, sondern die Schiebekupplung kann ein vorzugsweise geringes Spiel in radialer Richtung aufweisen. Dies kann Vorteile in Bezug auf erhöhten Schutz gegenüber Verspannungen der Schneckenwelle bieten.

Mit Vorteil können die Schneckenräder globoid ausgeführt sein, und vorzugsweise bestehen sie ebenso wie die Schneckenwelle und -verzahnungen aus Metall. Die globoide Gestaltung erlaubt eine bessere Anpassung an die Kontur der Schneckenverzahnung. Dadurch steigert sich der Wirkungsgrad der Drehmomentübertragung von Schneckenverzahnung auf Schneckenrad, wodurch die Verluste verringert werden und das Schneckengetriebe insgesamt höher belastet werden kann. Entsprechendes gilt für die Ausführung aus Metall, da dies ebenfalls höhere Belastungen erlaubt als eine Ausführung aus Kunststoffmaterial, wie es typischerweise bei Scheibenwischergetrieben oder anderen Schneckengetrieben für geringe Leistung vorgesehen ist.

Vorzugsweise sind die Schneckenräder, Ritzel und/oder das **Ab**triebszahnrad als ungeteilte Zahnräder ausgeführt. Vorliegend werden unter "ungeteilten" Zahnrädern solche verstanden, die das Gegenteil von geteilten, verspannten Zahnrädern darstellen. Dank der Spielfixiereinrichtung genügen solche einfachen ungeteilten Zahnräder, die viel weniger Herstellungsaufwand erfordern und im Betrieb auch einen günstigeren Wirkungsgrad und damit auch weniger Verschleiß aufweisen als die klassischerweise verwendeten geteilten Zahnräder, um ein spielfreies Getriebe zu erreichen.

Zweckmäßigerweise sind die Ritzel in einer gemeinsamen Ebene liegend am Abtriebszahnrad angeordnet, wobei vorzugsweise die Ritzel und das Abtriebszahnrad schrägverzahnt sind. Damit kämmen die Ritzel in der gleichen axialen Position am Abtriebszahnrad, wodurch eine Aufbringung unerwünschter zusätzlicher Kippmomente auf das Abtriebszahnrad wirksam vermieden wird. Ein weiterer Vorteil der Positionierung der Ritzel in derselben axialen Position in Bezug auf das Abtriebszahnrad ist, dass dann für beide Ritzel die volle Zahnbreite des Abtriebszahnrads genutzt werden kann. Die Materialausnutzung des Abtriebszahnrads ist dadurch maximiert. Das ist von besonderer Bedeutung, da das Abtriebszahnrad in der Regel das größte Bauteil des Kraftübertragungsstrangs ist, und dessen hohe Ausnutzung somit die Leistungsfähigkeit des Getriebes erhöht und/oder eine maximale Kompaktheit ermöglicht. Im Übrigen sorgt die Schrägverzahnung für einen ruhigeren Lauf und für eine bessere Materialausnutzung als bei einer Geradverzahnung.

Vorzugsweise ist die Abtriebswelle für einen beidseitigen Abtrieb ausgebildet. Unter beidseitig wird hierbei verstanden, dass beiden gegenüberliegenden Enden der Abtriebswelle als Abtrieb nutzbar sind. So können bspw. zwei (oder mehr) Abtriebsräder mit nur einer Abtriebswelle angetrieben werden, wie dies bei Transport- oder Förderantrieben häufig zweckmäßig ist.

Mit Vorteil ist die Abtriebswelle als eine Hohlwelle ausgeführt, vorzugsweise als eine von einer Seite des Getriebegehäuses bis zu einer gegenüberliegenden Seite durchlaufende Hohlwelle. Die Ausführung als Hohlwelle eignet sich so besonders für den beidseitigen Abtrieb. Ferner bietet diese Ausführung den Vorteil, dass die Hohlwelle bei gleichem Materialeinsatz einen größeren Durchmesser aufweist. Dies ergibt eine günstigere Geometrie, wodurch bei gleichem Materialeinsatz größere Drehmomente übertragen werden können. Zudem verbreitert sich das Anwendungsfeld, da ein Schneckengetriebe mit Hohlwelle einfach auf eine vorhandene Welle aufgesteckt werden kann bzw. mittig an einer getriebenen Welle angeordnet sein kann. Ferner vorteilhaft ist eine Ausführung des Schneckengetriebes als Winkelgetriebe. Letzteres ist für viele Antriebsaufgaben ein erheblicher Vorteil, insbesondere im Zusammenhang in der Ausführung mit Hohlwelle.

Vorzugsweise ist die Schneckenwelle quer und achsversetzt zu der Abtriebswelle angeordnet mit einem Versatz, der mindestens der Hälfte der addierten Durchmesser von Schneckenwelle und Abtriebswelle entspricht. Eine solche Dimensionierung ermöglicht die der Abtriebswelle für einen beidseitigen Abtrieb auszubilden, und zwar insbesondere in der Ausführung der Abtriebswelle als Hohlwelle.

Zweckmäßigerweise ist ein Achsabstand der Schneckenstufe zwischen Schneckenwelle und Schneckenräder höchstens halb so groß ist wie ein Achsabstand der Stirnradstufe zwischen Ritzel und Abtriebszahnrad. Auf diese Weise kann, insbesondere bei der Ausführung der Abtriebswelle als Hohlwelle, auf günstige Weise eine beanspruchungsgerechte Auslegung der Wellen erreicht werden, insbesondere im Hinblick auf großen Durchmesser der Abtriebswelle.

Mit Vorteil ist die Ankopplung zur vorzugsweise verdrehspielarmen, insbesondere nahezu verdrehspielfreien, Aufnahme der Treibwelle ausgeführt. Damit ergibt sich bei der Ankopplung in derselben Weise wie bei einer einstückigen Ausführung eine spielfreie Übertragung der Motorbewegung auf das Schneckengetriebe, ohne jedoch die Nachteile der einstückigen Ausführung wie eingangs erläutert. Die Ankopplung kann mit Vorteil insbesondere ausgeführt sein als Keil-Verbindung, insbesondere Keilwellen-Verbindung (Spline-Coupling), oder als Verbindung mit Passfeder. Damit eignet sich die Ankopplung auch für einen bidirektional betriebenen Antrieb, bei dem möglichst ohne Spiel zwischen den Bewegungsrichtungen umgeschaltet werden soll.

Das Getriebegehäuse weist zweckmäßigerweise im Bereich der Ankopplung einen Flansch auf zur Aufnahme des Antriebsmotors, wobei der Antriebsmotor vorzugweise über den Flansch zentriert ist. Auf diese Weise kann der Antriebsmotor leicht gewechselt bzw. ausgetauscht werden. Dies wird unterstützt dadurch, dass die Zentrierung des Antriebsmotors mittels des Flansches erfolgt, wodurch dann über die Ankopplung auch eine Zentrierung des antriebsnahen Endes der Schneckenwelle erreicht wird. Ferner kann anstelle des Antriebsmotors ein Adapterstück vorgesehen werden, wobei vorzugsweise mehrere verschieden Adapterstücke zur Befestigung des Antriebsmotors an dem Flansch vorgesehen sind. So kann eine günstige Anpassung an verschiedenartige Motoren und/oder unterschiedliche Einbaulagen erreicht werden.

Das Getriebegehäuse ist mit Vorteil als ein Blockgehäuse ausgeführt. Verglichen einer geteilten Ausführung des Getriebegehäuses gibt es somit keine Trennfuge, was bei gleichem Materialeinsatz und Abmessungen eine beträchtliche Steigerung der Steifigkeit sowie Stabilität des Gehäuses mit sich bringt. Für Getriebeausführungen mit schrägverzahnten Zahnrädern ist das ein besonders bedeutender Vorteil, da hierbei bauartbedingt durch die Schrägverzahnung erhebliche Axialkräfte entstehen, die vom Getriebegehäuse aufgenommen werden müssen. Ferner bietet ein solches trennfugenloses und vorzugsweise einstückiges Blockgehäuse den Vorteil größerer Dichtigkeit bzw. eines verringerten Leckagerisikos. Ferner entfällt bei einem Blockgehäuse die mitunter aufwendige Bearbeitung der Trennfuge zwischen Gehäusehälften. Zur Montage weist mit Vorteil das Getriebegehäuse eine Montageöffnung auf, die durch einen Getriebedeckel verschließbar ist. Hierdurch können bei der Montage die kraftübertragenden Getriebekomponenten in das ansonsten geschlossene Blockgehäuse eingebracht werden. Die Wellen, Lager und Zahnräder werden dann im Gehäuse gefügt. Zweckmäßigerweise ist die Öffnung länglich und erstreckt sich parallel zur Schneckenwelle im Bereich eines der Schneckenräder. Dies ermöglicht einen guten Zugang zur Montage der größeren Komponenten, insbesondere Abtriebszahnrad und Schneckenwelle. Außerdem ermöglich es direkten Zugang zur Wartung der Getriebestufen.

Zweckmäßigerweise weist das Gehäuse eine gemeinsame Getriebekammer für die Schneckenwelle, Zwischenwelle und Abtriebswelle auf, und zwar ohne Zwischenwände. Dies erleichtert Herstellung und Montage wie auch die Wartung. Besonders bevorzugt ist es, die Gehäuseteile hinterschnittfrei auszuführen, um eine kostengünstige Herstellung und einfachere Montage zu ermöglichen.

Mit Vorteil sind Lager für die Zwischenwellen, für die Abtriebswelle und/oder das Lager für die Schneckenwelle, an der Wandung des Getriebegehäuses angeordnet. Dies erleichtert die Montage und bietet ferner den Vorzug, dass unnötiger Aufwand vermieden wird für Zwischenwände oder andere Hilfskonstruktion zur Lageraufnahme, welche zum einen Mehraufwand bei der Herstellung verursachen zum anderen die Montage und ggf. auch die spätere Zugänglichkeit im Rahmen der Wartung komplizieren. Mit Vorteil sind Lagersitze für die Wellen von außen zugänglich ausgeführt. Dies ermöglicht es, die Lager von außen einzusetzen, so dass nur noch die entsprechenden Wellen von innen einzustecken sind. Das erleichtert die Montage beträchtlich.

Die Erfindung erstreckt sich ferner auf eine Getriebe/MotorAnordnung, umfassend ein Getriebe in einem Getriebegehäuse mit einer Schneckenwelle wie vorstehend beschrieben und einen Antriebsmotor mit einer antreibenden Treibwelle, wobei die Schneckenwelle des Getriebes und die Treibwelle als geteilte Elemente ausgeführt und über eine Schiebekupplung aneinander gekoppelt sind. Dank der geteilten Ausführung kann die Schneckenwelle unabhängig von der Treibwelle axial verschieblich ausgeführt sein. Für die Getriebe/Motor-Anordnung werden damit die Vorteile realisiert, wie sie vorstehend zu dem Schneckengetriebe erläutert wurden. Zur Vermeidung unnötiger Wiederholungen wird auf vorstehende Beschreibung Bezug genommen.

Nachfolgend wird der Erfindung unter Bezugnahme auf die beigefügte Zeichnung anhand eines vorteilhaften Ausführungsbeispiels näher erläutert. Es zeigen:

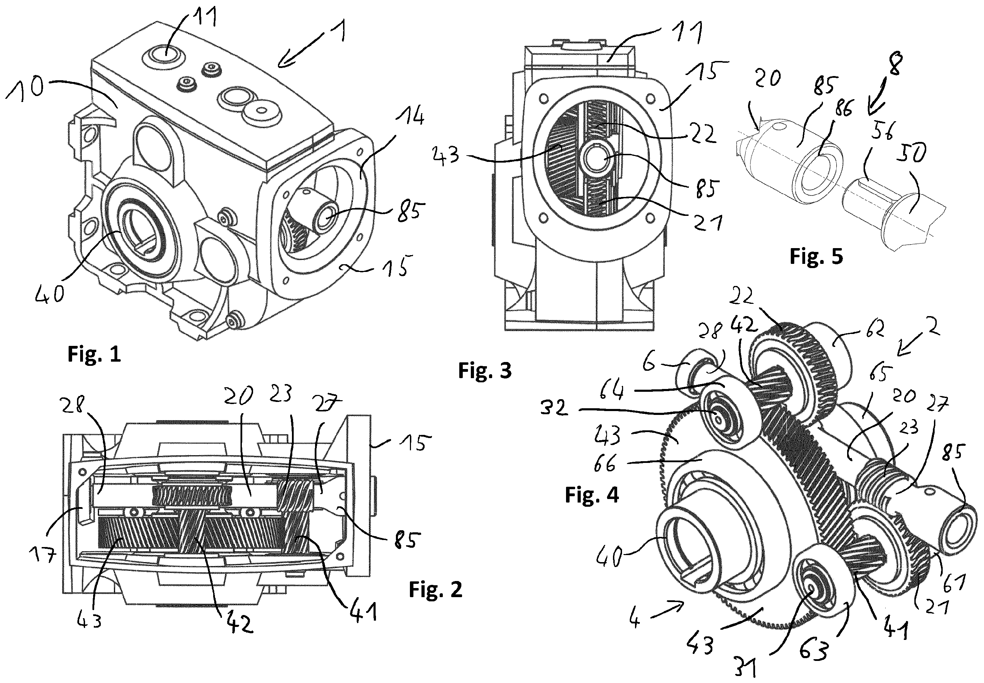

- Fig. 1: eine perspektivische Ansicht eines Schneckengetriebes gemäß einer Ausführungsform der Erfindung;
- Fig. 2: eine Aufsicht auf das Schneckengetriebe der Ausführungsform gemäß Figur 1;
- Fig. 3: eine Vorderansicht des Schneckengetriebes der Ausführungsform gemäß Figur 1;
- Fig. 4: eine perspektivische Darstellung der in einer Getriebekammer des Schneckengetriebes gemäß Figur 1 angeordneten Schneckenradstufe und Stirnradstufe;
- Fig. 5: eine perspektivische Darstellung einer Ankopplung an eine Treibwelle;
- Fig. 6a, b: eine perspektivische Ansicht sowie eine Schnittansicht zu einer alternativen Variante für eine Ankopplung;
- Fig. 7: eine perspektivische Ansicht einer Getriebemotoranordnung als Explosionsansicht;
- Fig. 8: eine Schnittansicht entlang einer Schneckenwelle des Getriebes;
- Fig. 9, b: Detailansichten zu einem Lager mit optionaler Spielfixiereinrichtung;
- Fig. 10: eine Schnittansicht zur Ausführung der Ankopplung;
- Fig. 11: eine laterale Ansicht des Getriebegehäuses;
- Fig. 12: eine Schnittansicht gemäß der Linie A-A aus Figur 11;
- Fig. 13: eine Schnittansicht gemäß der Linie B-B aus Figur 11;
- Fig. 14: eine perspektivische Ansicht mit einem Adapter zur Aufnahme eines Antriebsmotors; und
- Fig. 15: eine Schnittansicht ähnlich zu Fig. 12 für eine Variante mit einer durchgehenden Abtriebswelle.

Ein in seiner Gesamtheit mit der Bezugsziffer 1 bezeichnetes Schneckengetriebe weist eine im wesentlichen quaderförmige Grundform auf. Die breiten Flächen des Quaders bilden hierbei Lateralseiten des Gehäuses 10 des Schneckengetriebes 1. An seiner (schmalen) Oberseite ist ein abnehmbarer Deckel 11 ausgebildet.

An einer Vorderseite des Gehäuses 10 ist eine Öffnung 14 ausgebildet, über die ein Zugang freigegeben ist zu einer Getriebekammer im Inneren des Gehäuses 10 mit einer Schneckenstufe 2 sowie einer Stirnradstufe 4. Etwa mittig in der Öffnung 14 ist ein antriebsseitiges Ende 27 einer Schneckenwelle 20 der Schneckenstufe 2 angeordnet. Das andere, ferne Ende 28 der Schneckenwelle 20 ist über ein Lager 6 an eine Rückseite des Gehäuses 10 gelagert. Das Lager 6 selbst ist in dem dargestellten Ausführungsbeispiel als Loslager ausgebildet, was bedeutet, dass es das ferne Ende der Schneckenwelle 28 radial fest einspannt, jedoch eine axiale Verschieblichkeit der Schneckenwelle 20 zulässt.

Die Schneckenwelle 20 weist auf ihrem Mantel zwei Schneckenverzahnungen 23, 24 auf, welche die gleiche Geometrie, jedoch unterschiedliche Steigungsrichtungen aufweisen. So ist die eine Schneckenverzahnung rechtssteigend, während der andere linkssteigend ist. Die beiden Schneckenverzahnungen 23, 24 kämmen jeweils mit einem der Schneckenräder 21, 22, die sich auf gegenüberliegenden Seiten der Schneckenwelle 20 befinden. Die Schneckenräder 21, 22 sind angeordnet auf einer ersten Zwischenwelle 31 bzw. einer zweiten Zwischenwelle 32, die quer zur Schneckenwelle 20 angeordnet sind und jeweils ein schrägverzahntes Ritzel 41, 42 tragen. Die beiden Zwischenwellen 31, 32 sind jeweils über Kugellager 61, 63 bzw. 62, 64 an ihren Enden in Aufnahmen an den Lateralseiten des Gehäuses 10 gelagert. Trotz der gegensinnigen Steigung der Schneckenverzahnungen 23, 24 drehen sich die beiden Schneckenräder 21, 22 aufgrund ihrer Anordnung auf gegenüberliegenden Seiten der Schneckenwelle 20 in die gleiche Richtung.

Damit drehen sich auch die beiden Ritzel 41, 42 in die gleiche Richtung. Sie greifen ein in ein im Durchmesser deutlich größeres Abtriebszahnrad 43 und bilden so eine Stirnradstufe 4. Das Abtriebszahnrad 43 ist wie die beiden Ritzel 41, 42 schrägverzahnt. Da aufgrund der Anordnung der Zwischenwellen 31, 32 mit den antreibenden Schneckenrädern 21, 22 die Zwischenwellen 31, 32 und damit auch die Ritzel 41, 42 in derselben Richtung drehen, können die beiden Ritzel 41, 42 problemlos auf ein gemeinsames Abtriebszahnrad 43 einwirken. Im Ergebnis ergibt sich somit eine Leistungsverzweigung über die beiden Schneckenverzahnungen 23, 24 der Schneckenwelle 20 auf die beiden Zwischenwellen 31, 32, und die Leistungspfade vereinigen sich wieder im Abtriebszahnrad 43. Somit wird das Abtriebszahnrad 43 durch zwei kämmende Ritzel 41, 42 angetrieben, wodurch sich das übertragbare Drehmoment des Abtriebszahnrad 43 bei gleicher Größe nahezu verdoppelt. Da typischerweise das Abtriebszahnrad 43 das größte und schwerste Bauteil eines solchen Getriebes ist, erhält es so eine erhöhte Leistungsdichte, ohne größer dimensionierte Komponenten zu erfordern.

Das Abtriebszahnrad 43 sitzt auf einer Abtriebswelle 40, die als Hohlwelle ausgeführt ist. Die Abtriebswelle 40 ist über Kugellager 65, 66 in einer entsprechenden Weise wie bei den Zwischenwellen 31, 32 an den Lateralseiten des Gehäuses 10 gelagert. Die als Hohlwelle ausgeführte Abtriebswelle 40 ist auf beiden gegenüberliegenden Seiten des Gehäuses 10 rausgeführt.

Das Gehäuse 10 ist als einteiliges Blockgehäuse ausgeführt. Auf der Oberseite des Gehäuses 10 ist eine Öffnung vorgesehen, welche einen großflächigen Zugang zu der Getriebekammer im Inneren des Gehäuses 10 gibt. Unter "großflächig" wird hierbei verstanden, dass die von der Öffnung freigegebene Fläche ausreichend bemessen ist für einen Durchgang des Abtriebszahnrads, welches regelmäßig das größte und schwerste Bauteil des Schneckengetriebes ist. Durch diese großflächige Öffnung können so die Komponenten des Schneckengetriebes, einschließlich des großen Abtriebszahnrads, auf einfache Weise eingebracht und montiert werden. Sie ist verschlossen durch den aufsetzbaren Deckel 11.

An der Vorderseite des Getriebegehäuses 10 ist ein Flansch 15 zur Aufnahme eines Antriebsmotors 5 vorgesehen. Der Flansch 15 berandet eine Öffnung 14, über die Zugang zum Inneren des Gehäuses 10 besteht und in deren Mitte die Schneckenwelle 20 mit ihrem antriebsseitigen Ende 27 angeordnet ist. Die Schneckenwelle 20 weist dort eine Ankopplung 85 zur Aufnahme einer Treibwelle 50, hier gebildet durch die Motorwelle des Antriebsmotors 5 auf. Der Antriebsmotor 5 weist einen Gegenflansch 55 auf, mit dem er an dem Flansch 15 des Gehäuses 10 befestigt werden kann. Eine Zentrierung des Antriebsmotors 5 erfolgt hierbei durch den Flansch 15, und in der Folge zentriert der Antriebsmotor 5 über die Ankopplung 85 das getriebenahe Ende der Schneckenwelle 20. Der Flansch 15 ist vorzugsweise ungeteilt ausgeführt. Damit kann ein unter Dichtungsaspekten ungünstiger Spalt im Bereich der vom Flansch 15 berandeten Öffnung 14 vermieden werden.

Die Ankopplung 85 für die Treibwelle 50 des Antriebsmotors 5 ist als Schiebekupplung 8 ausgeführt, so dass eine drehfeste Verbindung geschaffen ist, aber dennoch eine axiale Beweglichkeit zwischen Schneckenwelle 20 einerseits und Treibwelle 50 erlaubt ist. Dazu ist die Ankopplung 85 mit einer Passfeder-Aufnahme 86 versehen, in die eine Passfeder 56 an der Treibwelle 50 des Antriebsmotors 5 drehfest eingebracht ist. Bei einer Variante kann die Ankopplung 85 versehen sein mit einem Keilwellenverbinder 86'. Dieser ist mit einer Vielzahl von keilförmigen Längsnuten versehen, die zur Aufnahme eines mit entsprechenden Keilnuten 56' versehenen Kopfs der Treibwelle 50 ausgebildet ist. Dies ermöglicht eine hoch belastbare drehfeste Verbindung, die dennoch dank der sich in Längsrichtung erstreckenden Nutung axial verschieblich ist.

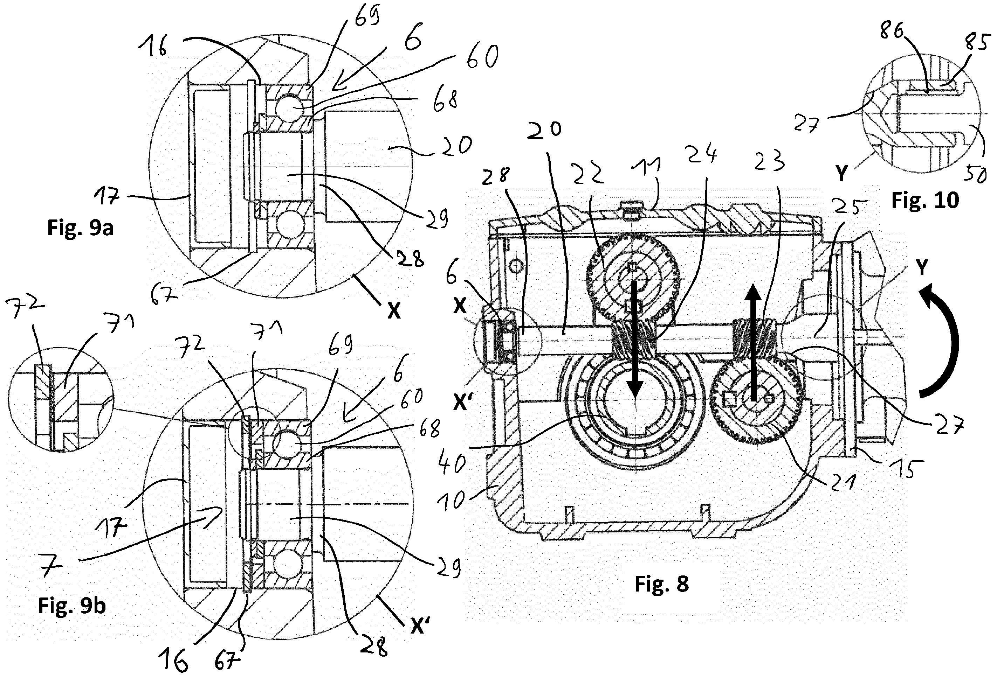

Eine Schnittansicht durch das Gehäuse 10 ist in Figur 8 dargestellt. Man erkennt die Schneckenwelle 20 mit ihren Schneckenverzahnungen 23, 24, die mit den gegenüberliegend an der Schneckenwelle 20 angeordneten Schneckenrädern 21, 22 kämmen. Die durch die Schneckenräder 21, 22 jeweils aufgebrachte Radialkraft ist durch schwarze Pfeile dargestellt. Wie man sieht, sind sie einander entgegen gerichtet, sodass sie sich weitgehend kompensieren. Die verbleibende Kraft bzw. ein durch sie auf die Schneckenwelle am antriebseitigen Ende 27 induziertes Kippmoment ist dargestellt durch den bogenförmigen Pfeil im rechten Bereich der Figur. Dieses Kippmoment wird erfindungsgemäß abgestützt durch die Ankopplung 85 an der Treibwelle 50 des Antriebsmotors 5. Das Zusammenwirken zwischen der Ankopplung 85 am antriebsseitigen Ende 27 der Schneckenwelle 20 und dem Kopf der Treibwelle 50 ist in Detail Y visualisiert, wie es in Figur 10 vergrößert dargestellt ist. Durch die in Radialrichtung feste Lagerung des Kopfs der Treibwelle 50 mit der Ankopplung 85 am antriebsseitigen Ende 27 der Schneckenwelle 20 ergibt sich insoweit eine stabile Abstützung der Schneckenwelle 20. Durch die Gestaltung der Ankopplung 25 als längsverschieblich in Kombination mit dem längsverschieblichen Lager 6 am fernen Ende 28 der Schneckenwelle 20 ist sichergestellt, dass dank dieser Schiebekupplung 8 die Schneckenwelle 20 sich in Axialrichtung bewegen kann. Sie nimmt so selbsttätig die Position ein, welche für eine optimale Leistungsverzweigung zwischen den beiden Schneckenverzahnungen 23, 24 und den über die Schneckenräder 21, 22 angetriebenen Zwischenwellen 31, 32 sorgt.

Einzelheiten der Gestaltung des Lagers 6 sind durch das Detail X bzw. in einer Variante durch das Detail X' in Figur 9a bzw. Figur 9b dargestellt.

Das Lager 6 ist in einem Lagersitz 16 der rückseitigen Wandung des Gehäuses 10 angeordnet, vorzugsweise mit einer Spielpassung. Es umfasst ein Wälzlager mit Kugeln 60 als Wälzkörper, die zwischen einem Innenring 68 und einem Außenring 69 laufen.

In dem Innenring 68 ist ein am Ende der Schneckenwelle 20 angeordneter Lagerzapfen 29 eingesteckt, wie in Figur 9a dargestellt. Hierbei ist der Außenring 69 des Wälzlagers 6 axial verschieblich in dem Lagersitz 16, so dass so dass eine axiales Verschieblichkeit des Lagers 6 und damit auch der Schneckenwelle 20 besteht.

Bei einer Variante, wie sie in Figur 9b dargestellt ist, ist für das Lager 6 eine optionale Spielfixiereinrichtung 7 vorgesehen. Mit ihr kann das Spiel des Lagers 6 eingestellt werden, im Bedarfsfall bis auf den Wert Null herunter. Ist die Spielfixiereinrichtung 7 aktiviert, so liegt ein erster Zustand vor, in dem die Schneckenwelle 20 in Axialrichtung spielfrei gelagert ist. Dazu weist die Spielfixiereinrichtung 7 einen Sicherungsring 72 auf, welcher in eine umlaufende Nut 67 eingebracht ist, die mit einem gewissen Abstand von dem Außenring 69 des Lagers 6 in dem Lagersitz 16 eingearbeitet ist. Der so zwischen dem Sicherungsring 72 und dem Lager 6 gebildete Freiraum ist aufgefüllt durch eine oder mehrere Passscheiben 71, die unterschiedliche Dicken aufweisen können, um so einen spielfreien Sitz der Schneckenwelle 20 zu erreichen. Durch Entfernen des Sicherungsrings 72 und/oder der Passscheibe 71 kann die Spielfixiereinrichtung in einen zweiten Zustand gebracht werden, in dem das axiale Spiel freigegeben ist.

Einsetzen und Entfernen der Passscheibe 71 und/oder des Sicherungsrings 72 können von außen erfolgen, indem der Lagerdeckel 17 von dem Lagersitz 16 abgenommen und der so der Zugang zu Spielfixiereinrichtung 7 freigegeben ist. Damit ist auch im montierten Zustand ein Wechsel zwischen dem ersten und zweiten Zustand oder umgekehrt ermöglicht.

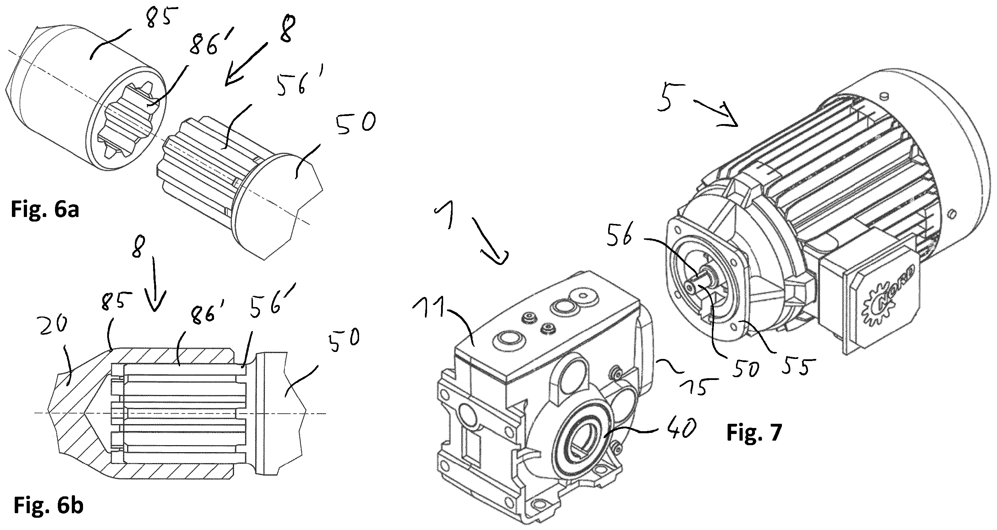

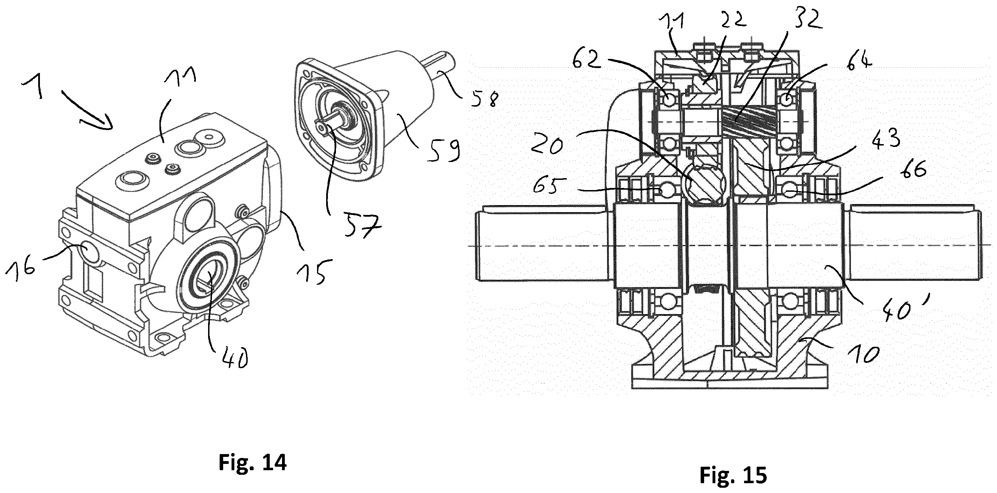

Die Ankopplung des Antriebsmotors 5 kann direkt erfolgen, wie in Figur 7 dargestellt, oder alternativ auch indirekt über ein Adapterstück 59, wie es in Figur 14 dargestellt ist. Das Adapterstück 59 weist getriebeseitig eine Abgabewelle 57 auf, welche an die Stelle der Treibwelle 50 bei dem direkten Anbau des Antriebsmotors 5 tritt. Das Adapterstück 59 weist an seinem anderen Ende eine Eingangswelle 58 auf, über die der Antriebsmotor (in Figur 14 nicht dargestellt) angeordnet werden kann. Somit ist das erfindungsgemäße Getriebe universell verwendbar sowohl für direkten Anbau von dem Antriebsmotor wie auch für Adapter zum indirekten Antrieb.

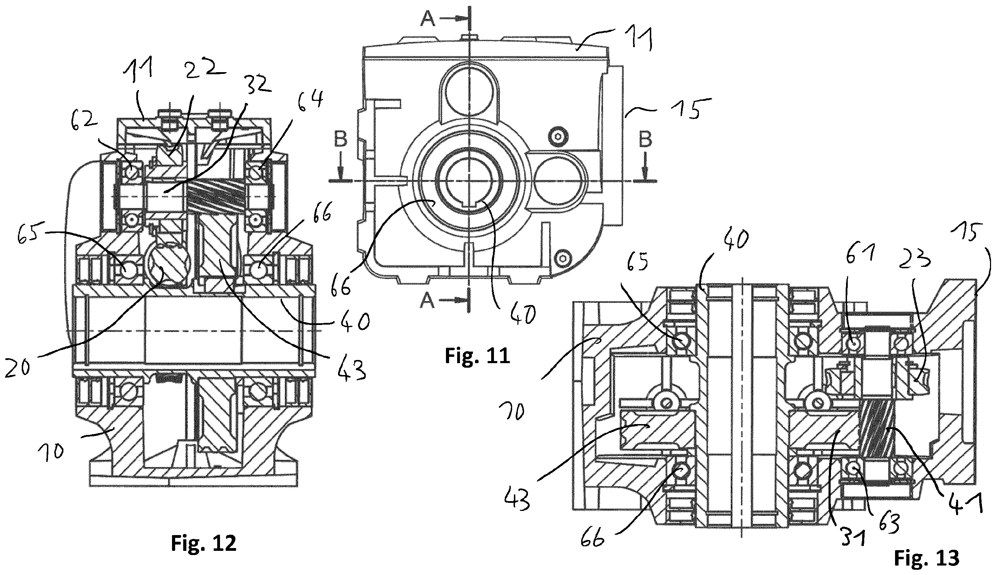

In Fig. 15 ist eine Variante dargestellt. Sie unterscheidet sich von dem in Fig. 12 dargestelltem Ausführungsbeispiel im Wesentlichen dadurch, dass als Abtriebswelle 40 nicht eine Hohlwelle, sondern eine durchgehende und beidseitig aus dem Getriebegehäuse 10 herausgeführte Vollwelle 40' vorgesehen ist. Dies ermöglicht bspw. den Antrieb von zwei Abtriebsrädern (in Fig. 15 nicht dargestellt) mit nur einer Abtriebswelle.

## Patentansprüche

1. Schneckengetriebe umfassend eine Schneckenstufe (2) und eine weitere Stufe (4) in einem Getriebegehäuse (10), wobei die Schneckenstufe (2) eine Schneckenwelle (20) mit zwei gegensinnigen Schneckenverzahnungen (23, 24) und mindestens zwei quer zur Schneckenwelle (20) angeordnete Zwischenwellen (31, 32) mit jeweils einem Schneckenrad (21, 22) umfasst, wobei eines der Schneckenräder (21, 22) in eine der Schneckenverzahnungen (23, 24) und das andere in die andere der Schneckenverzahnungen (24, 23) eingreift, und
wobei die Schneckenwelle (20) an ihrem einen, antriebsnahen Ende eine Ankopplung (85) für eine Treibwelle (50) aufweist,
wobei die Ankopplung (85) als eine Schiebekupplung (8) ausgeführt ist, die dazu ausgebildet ist, die Treibwelle (50) drehfest aber axial verschieblich aufzunehmen zur Übertragung eines von einem Antriebsmotor auf die Treibwelle (50) aufgebrachten Drehmoments zum Antrieb der Schneckenwelle (20), dadurch gekennnzeichnet, dass die weitere Stufe eine Stirnradstufe (4) ist, die jeweils ein Ritzel (41, 42) auf den Zwischenwellen (31, 32) und ein Abtriebszahnrad auf einer Abtriebswelle (40) umfasst, wobei das Abtriebszahnrad ein gemeinsames Abtriebszahnrad (43) ist, mit dem die Ritzel (41, 42) kämmen,
wobei die Schneckenräder (21, 22) an gegenüberliegenden Seiten der Schneckenwelle (20) angeordnet sind und die Schneckenwelle (20) lediglich einseitig im Getriebegehäuse (10) gelagert ist, und zwar mittels eines Lagers (6) an ihrem antriebsfernen Ende.

2. Schneckengetriebe nach Anspruch 1, **dadurch gekennzeichnet, dass** das Lager (6) als ein Loslager ausgeführt ist, das ein Axialspiel für eine axiale Beweglichkeit erlaubt.

3. Schneckengetriebe nach Anspruch 1 oder 2, **dadurch gekennzeichnet, dass** eine optionale Spielfixiereinrichtung (7) für das Lager (6) vorgesehen ist, mit der in einem ersten Zustand ein Axialspiel des Lagers (6) auf Null reduziert ist, wobei vorzugsweise die Spielfixiereinrichtung (7) zwischen dem ersten Zustand und einem zweiten Zustand umschaltbar ist, wobei die Spielfixiereinrichtung (7) in dem zweiten Zustand deaktiviert ist und das Axialspiel freigegeben ist.

4. Schneckengetriebe nach Anspruch 3, **dadurch gekennzeichnet, dass** die Spielfixiereinrichtung (7) einen Aufnahmeraum für ein Sperrelement aufweist, welches dazu ausgebildet ist, axiale Beweglichkeit zu blockieren.

5. Schneckengetriebe nach einem der Ansprüche 3 oder 4, **dadurch gekennzeichnet, dass** die Spielfixiereinrichtung (7) eine Mehrzahl von auswechselbaren Passscheiben (71) unterschiedlicher Dicke umfasst, vorzugsweise ferner einen Sicherungsring (72) für die Passscheiben (71).

6. Schneckengetriebe nach einem der Ansprüche 3 bis 5, **dadurch gekennzeichnet, dass** die Spielfixiereinrichtung (7) im eingebauten Zustand von außen zwischen den Zuständen umschaltbar ist.

7. Schneckengetriebe nach einem der vorangehenden Ansprüche, **dadurch gekennzeichnet, dass** die Schiebekupplung (8) zur Übertragung von Radialkräften ausgebildet ist.

8. Schneckengetriebe nach einem der vorangehenden Ansprüche, **dadurch gekennzeichnet, dass** die Schneckenräder (21, 22) globoid ausgeführt sind, und vorzugsweise ebenso wie die Schneckenwelle (20) und -verzahnungen aus Metall bestehen.

9. Schneckengetriebe nach einem der vorangehenden Ansprüche, **dadurch gekennzeichnet, dass** die Ritzel (41, 42) in einer gemeinsamen Ebene liegend am Abtriebszahnrad (43) angeordnet sind, wobei vorzugsweise die Ritzel (41, 42) und das Abtriebszahnrad (43) schrägverzahnt sind.

10. Schneckengetriebe nach einem der vorangehenden Ansprüche, **dadurch gekennzeichnet, dass** die Abtriebswelle (40) für einen beidseitigen Abtrieb ausgebildet ist, und/oder die Abtriebswelle (40) als eine Hohlwelle ausgeführt ist, vorzugsweise als eine von einer Seite des Getriebegehäuses (10) bis zu einer gegenüberliegenden Seite durchlaufende Hohlwelle.

11. Schneckengetriebe nach einem der vorangehenden Ansprüche, **dadurch gekennzeichnet, dass** die Schneckenwelle (20) quer und achsversetzt zu der Abtriebswelle (40) angeordnet ist mit einem Versatz, der mindestens der Hälfte der addierten Durchmesser von Schneckenwelle (20) und Abtriebswelle (40) entspricht.

12. Schneckengetriebe nach einem der vorangehenden Ansprüche, **dadurch gekennzeichnet, dass** ein Achsabstand der Schneckenstufe (2) zwischen Schneckenwelle (20) und Schneckenräder (21, 22) höchstens halb so groß ist wie ein Achsabstand der Stirnradstufe (4) zwischen Ritzel (41, 42) und Abtriebszahnrad (43).

13. Schneckengetriebe nach einem der vorangehenden Ansprüche, **dadurch gekennzeichnet, dass** das Getriebegehäuse (10) im Bereich der Ankopplung (85) einen Flansch (15) aufweist zur Aufnahme des Antriebsmotors (5), wobei der Antriebsmotor (5) vorzugweise über den Flansch (15) zentriert ist, und/oder zur Befestigung des Antriebsmotors (5) an dem Flansch (15) mindestens ein, vorzugsweise mehrere verschiedene Adapterstücke (59) vorgesehen sind.

14. Schneckengetriebe nach einem der vorangehenden Ansprüche, **dadurch gekennzeichnet, dass** das Getriebegehäuse (10) als ein Blockgehäuse ausgeführt ist, insbesondere einstückig mit einer durch einen aufsetzbaren Getriebedeckel (11) verschließbaren Montageöffnung, die vorzugsweise länglich ist und sich parallel zur Schneckenwelle (20) im Bereich eines der Schneckenräder (21, 22) erstreckt.

15. Schneckengetriebe nach einem der vorangehenden Ansprüche, **dadurch gekennzeichnet, dass** das Gehäuse (10) eine gemeinsame Getriebekammer für die Schneckenwelle (20), Zwischenwellen (31, 32) und Abtriebswelle (40) aufweist.

16. Schneckengetriebe nach einem der vorangehenden Ansprüche, **dadurch gekennzeichnet, dass** Lager (61, 62, 63, 64, 65, 66) für die Zwischenwellen (31, 32), für die Abtriebswelle (40) und/oder das Lager (6) für die Schneckenwelle (20) an der Wandung des Getriebegehäuses (10) angeordnet sind, wobei die Lager (61, 62, 63, 64, 65, 66) vorzugsweise von außen einsetzbar und auswechselbar sind.

17. Schneckengetriebe nach einem der vorangehenden Ansprüche, **dadurch gekennzeichnet, dass** die Schneckenräder (21, 22) aufgrund ihrer Anordnung auf gegenüberliegenden Seiten der Schneckenwelle (20) sich in die gleiche Richtung drehen.

18. Getriebe/Motor-Anordnung umfassend ein Getriebe (1) in einem Getriebegehäuse (10) mit einer Schneckenwelle (20) nach einem der vorangehenden Ansprüche und einen Antriebsmotor (5) mit einer antreibenden Treibwelle (50), **dadurch gekennzeichnet, dass** die Schneckenwelle (20) des Getriebes (1) und die Treibwelle (50) als geteilte Elemente ausgeführt und über eine Schiebekupplung (8) aneinander gekoppelt sind.

## Claims

1. Worm transmission comprising a worm stage (2) and a further stage (4) in a transmission housing (10), wherein the worm stage (2) comprises a worm shaft (20), having two oppositely directed worm toothings (23, 24), and at least two intermediate shafts (31, 32), arranged transversely to the worm shaft (20) and having in each case one worm gear (21, 22), wherein one of the worm gears (21, 22) engages into one of the worm toothings (23, 24) and the other engages into the other of the worm toothings (24, 23), and
wherein the worm shaft (20) has at one end, close to the drive, thereof a coupling (85) for a drive shaft (50), wherein the coupling (85) is in the form of a sliding coupling (8) that is configured to receive the drive shaft (50) in a rotationally conjoint but axially displaceable manner for transmission of a torque applied by a drive motor to the drive shaft (50) for driving the worm shaft (20), **characterized in that**
the further stage is a spur-gear stage (4) which comprises in each case one pinion (41, 42) on the intermediate shafts (31, 32) and comprises an output toothed gear on an output shaft (40),
wherein the output toothed gear is a common output toothed gear (43) with which the pinions (41, 42) mesh, wherein the worm gears (21, 22) are arranged on opposite sides of the worm shaft (20) and the worm shaft (20) is mounted only on one side in the gearbox housing (10), specifically by means of a bearing (6) at the end thereof which is remote from the drive.

2. Worm transmission according to Claim 1, **characterized in that** the bearing (6) is in the form of a floating bearing that permits axial play for axial movability.

3. Worm transmission according to Claim 1 or 2, **characterized in that** provision is made of an optional play-fixing device (7) for the bearing (6), by way of which play-fixing device an amount of axial play of the bearing (6) is reduced to zero in a first state, wherein preferably the play-fixing device (7) is switchable between the first state and a second state, wherein the play-fixing device (7) is deactivated in the second state and the axial play is released.

4. Worm transmission according to Claim 3, **characterized in that** the play-fixing device (7) has a receiving space for a blocking element which is configured to block axial movability.

5. Worm transmission according to either of Claims 3 and 4, **characterized in that** the play-fixing device (7) comprises a plurality of interchangeable shims (71) of different thicknesses, and preferably also a securing ring (72) for the shims (71).

6. Worm transmission according to one of Claims 3 to 5, **characterized in that**, in the installed state, the play-fixing device (7) is switchable between the states from the outside.

7. Worm transmission according to one of the preceding claims, **characterized in that** the sliding coupling (8) is configured for transmission of radial forces.

8. Worm transmission according to one of the preceding claims, **characterized in that** the worm gears (21, 22) are of globoid design and preferably, just like the worm shaft (20) and worm toothings, consist of metal.

9. Worm transmission according to one of the preceding claims, **characterized in that** the pinions (41, 42) are arranged on the output toothed gear (43) so as to lie in a common plane, wherein preferably the pinions (41, 42) and the output toothed gear (43) have helical toothings.

10. Worm transmission according to one of the preceding claims, **characterized in that** the output shaft (40) is configured for two-sided outputting, and/or the output shaft (40) is in the form of a hollow shaft, preferably in the form of a hollow shaft passing from one side of the transmission housing (10) to an opposite side.

11. Worm transmission according to one of the preceding claims, **characterized in that** the worm shaft (20) is arranged transversely to and axially offset from the output shaft (40), with an offset that corresponds to at least half the sum of the diameters of the worm shaft (20) and the output shaft (40).

12. Worm transmission according to one of the preceding claims, **characterized in that** an axis spacing of the worm stage (2) between the worm shaft (20) and the worm gears (21,22) is at most half the size of an axis spacing of the spur-gear stage (4) between the pinions (41, 42) and the output toothed gear (43).

13. Worm transmission according to one of the preceding claims, **characterized in that**, in the region of the coupling (85), the transmission housing (10) has a flange (15) for receiving the drive motor (5), wherein the drive motor (5) is preferably centred via the flange (15), and/or provision is made of at least one, preferably multiple different adapter pieces (59) for fastening of the drive motor (5) to the flange (15).

14. Worm transmission according to one of the preceding claims, **characterized in that** the transmission housing (10) is formed as a block housing, in particular in one piece with a fitting opening able to be closed off by a mountable transmission cover (11) and preferably being elongate and extending parallel to the worm shaft (20) in the region of one of the worm gears (21, 22).

15. Worm transmission according to one of the preceding claims, **characterized in that** the housing (10) has a common transmission chamber for the worm shaft (20), the intermediate shafts (31, 32) and the output shaft (40).

16. Worm transmission according to one of the preceding claims, **characterized in that** bearings (61, 62, 63, 64, 65, 66) for the intermediate shafts (31, 32) and output shaft (40) and/or the bearing (6) for the worm shaft (20) are/is arranged on the wall of the transmission housing (10), wherein the bearings (61, 62, 63, 64, 65, 66) are preferably insertable and interchangeable from the outside.

17. Worm transmission according to one of the preceding claims, **characterized in that** the worm gears (21, 22) rotate in the same direction owing to their arrangement on opposite sides of the worm shaft (20).

18. Transmission/motor arrangement comprising a transmission (1) in a transmission housing (10) having a worm shaft (20) according to one of the preceding claims and a drive motor (5) having a driving drive shaft (50), **characterized in that** the worm shaft (20) of the transmission (1) and the drive shaft (50) are formed as split elements and are coupled to one another via a sliding coupling (8).

## Revendications

1. Transmission à vis sans fin comprenant un étage (2) à vis sans fin et un autre étage (4) dans un boîtier (10) de transmission, l'étage (2) à vis sans fin comprenant un arbre (20) à vis sans fin avec deux dentures (23, 24) à vis sans fin de sens opposé et au moins deux arbres intermédiaires (31, 32) agencés transversalement à l'arbre (20) à vis sans fin avec chacun une roue (21, 22) à vis sans fin, l'une des roues (21, 22) à vis sans fin engrenant avec l'une des dentures (23, 24) à vis sans fin et l'autre engrenant avec l'autre des dentures (24, 23) à vis sans fin, et
l'arbre (20) à vis sans fin présentant, à son extrémité proche de l'entraînement, un accouplement (85) pour un arbre d'entraînement (50),
l'accouplement (85) étant réalisé sous la forme d'un accouplement à friction (8) qui est conçu pour recevoir l'arbre d'entraînement (50) de manière solidaire en rotation mais mobile axialement afin de transmettre un couple appliqué par un moteur d'entraînement à l'arbre d'entraînement (50) pour entraîner l'arbre (20) à vis sans fin, **caractérisée en ce que**
l'autre étage est un étage à engrenages cylindriques (4) qui comprend respectivement un pignon (41, 42) sur les arbres intermédiaires (31, 32) et une roue dentée d'entraînement sur un arbre de sortie (40),
la roue dentée d'entraînement étant une roue dentée d'entraînement commune (43) avec laquelle les pignons (41, 42) engrènent,
les roues (21, 22) à vis sans fin étant agencées sur des côtés opposés de l'arbre (20) à vis sans fin et l'arbre (20) à vis sans fin étant monté uniquement d'un côté dans le boîtier (10) de transmission, à savoir au moyen d'un palier (6) à son extrémité éloignée de l'entraînement.

2. Transmission à vis sans fin selon la revendication 1, **caractérisée en ce que** le palier (6) est conçu sous la forme d'un palier libre qui permet un jeu axial pour une mobilité axiale.

3. Transmission à vis sans fin selon la revendication 1 ou la revendication 2, **caractérisée en ce qu'**un dispositif optionnel (7) de rattrapage de jeu est prévu pour le palier (6), grâce auquel, dans un premier état, le jeu axial du palier (6) est réduit à zéro, le dispositif (7) de rattrapage de jeu étant de préférence commutable entre le premier état et un deuxième état, le dispositif (7) de rattrapage de jeu étant désactivé dans le deuxième état et le jeu axial étant libéré.

4. Transmission à vis sans fin selon la revendication 3, **caractérisée en ce que** le dispositif (7) de rattrapage de jeu comporte un espace de réception pour un élément de blocage qui est conçu pour bloquer la mobilité axiale.

5. Transmission à vis sans fin selon l'une des revendications 3 ou 4, **caractérisée en ce que** le dispositif (7) de rattrapage de jeu comprend une pluralité de rondelles d'ajustement interchangeables (71) d'épaisseurs différentes, de préférence également une bague de retenue (72) pour les rondelles d'ajustement (71).

6. Transmission à vis sans fin selon l'une des revendications 3 à 5, **caractérisée en ce que** le dispositif (7) de rattrapage de jeu est, à l'état monté, apte à être commuté depuis l'extérieur entre les états précités.

7. Transmission à vis sans fin selon l'une des revendications précédentes, **caractérisée en ce que** l'accouplement à friction (8) est conçu pour transmettre des forces radiales.

8. Transmission à vis sans fin selon l'une des revendications précédentes, **caractérisée en ce que** les roues (21, 22) à vis sans fin sont de forme globique et sont de préférence métalliques, tout comme l'arbre (20) à vis sans fin et les dentures.

9. Transmission à vis sans fin selon l'une des revendications précédentes, **caractérisée en ce que** les pignons (41, 42) sont agencés dans un plan commun sur la roue dentée d'entraînement (43), les pignons (41, 42) et la roue dentée d'entraînement (43) étant de préférence à denture hélicoïdale.

10. Transmission à vis sans fin selon l'une des revendications précédentes, **caractérisée en ce que** l'arbre de sortie (40) est conçu pour un entraînement bilatéral et/ou l'arbre de sortie (40) est réalisé sous forme d'arbre creux, de préférence sous forme d'arbre creux s'étendant d'un côté du boîtier (10) de transmission jusqu'à un côté opposé.

11. Transmission à vis sans fin selon l'une des revendications précédentes, **caractérisée en ce que** l'arbre (20) à vis sans fin est agencé transversalement et décalé axialement par rapport à l'arbre de sortie (40) avec un décalage qui correspond au moins à la moitié des diamètres additionnés de l'arbre (20) à vis sans fin et de l'arbre de sortie (40).

12. Transmission à vis sans fin selon l'une des revendications précédentes, **caractérisée en ce qu'**un entraxe de l'étage (2) à vis sans fin entre l'arbre (20) à vis sans fin et les roues à vis sans fin (21, 22) est au maximum égal à la moitié d'un entraxe de l'étage à engrenages cylindriques (4) entre les pignons (41, 42) et la roue dentée d'entraînement (43).

13. Transmission à vis sans fin selon l'une des revendications précédentes, **caractérisée en ce que** le boîtier (10) de transmission présente, dans la zone de l'accouplement (85), une bride (15) destinée à recevoir le moteur d'entraînement (5), le moteur d'entraînement (5) étant de préférence centré par la bride (15), et/ou au moins une pièce d'adaptation (59), de préférence plusieurs pièces d'adaptation différentes, étant prévues pour la fixation du moteur d'entraînement (5) sur la bride (15).

14. Transmission à vis sans fin selon l'une des revendications précédentes, **caractérisée en ce que** le boîtier (10) de transmission est réalisé sous forme de boîtier monobloc, en particulier d'un seul tenant avec une ouverture de montage apte à être fermée par un couvercle rapportable (11) de transmission, qui est de préférence allongée et qui s'étend parallèlement à l'arbre (20) à vis sans fin dans la zone de l'une des roues (21, 22) à vis sans fin.

15. Transmission à vis sans fin selon l'une des revendications précédentes, **caractérisée en ce que** le boîtier (10) comprend une chambre à transmission commune pour l'arbre (20) à vis sans fin, les arbres intermédiaires (31, 32) et l'arbre de sortie (40).

16. Transmission à vis sans fin selon l'une des revendications précédentes, **caractérisée en ce que** des paliers (61, 62, 63, 64, 65, 66) pour les arbres intermédiaires (31, 32), pour l'arbre de sortie (40) et/ou le palier (6) pour l'arbre (20) à vis sans fin sont agencés sur la paroi du boîtier (10) de transmission, les paliers (61, 62, 63, 64, 65, 66) étant de préférence insérables et interchangeables depuis l'extérieur.

17. Transmission à vis sans fin selon l'une des revendications précédentes, **caractérisée en ce que** les roues (21, 22) à vis sans fin tournent dans le même sens en raison de leur disposition sur des côtés opposés de l'arbre (20) à vis sans fin.

18. Dispositif d'entraînement/moteur comprenant une transmission (1) dans un boîtier (10) de transmission avec un arbre (20) à vis sans fin selon l'une des revendications précédentes et un moteur d'entraînement (5) avec un arbre d'entraînement (50), **caractérisé en ce que** l'arbre (20) à vis sans fin de la transmission (1) et l'arbre d'entraînement (50) sont réalisés sous forme d'éléments séparés et sont reliés l'un à l'autre par l'intermédiaire d'un accouplement à friction (8).
